# EUROPÄISCHE PATENTSCHRIFT

(11) **EP 1 915 244 B1**
(45) Veröffentlichungstag und Bekanntmachung des Hinweises auf die Patenterteilung: **02.09.2009**
(21) Anmeldenummer: 06792550.3
(22) Anmeldetag: 24.07.2006
(51) Int. Cl.: B29C 33/30, B29B 11/16, B29C 70/38, B29L 31/30

(54) **VERFAHREN ZUR HERSTELLUNG VON EIN- ODER MEHRSCHICHTIGEN FASERVORFORMLINGEN IM TFP-VERFAHREN**
METHOD FOR PRODUCING ONE-OR MULTI-LAYER LAYER FIBRE PREFORMS ACCORDING TO A TFP METHOD
PROCEDE POUR PRODUIRE DES EBAUCHES FIBREUSES MONOCOUCHES OU MULTICOUCHES AU COURS D'UN PROCEDE TFP

(30) Priorität: 22.07.2005 DE 102005034393
(43) Veröffentlichungstag der Anmeldung: 30.04.2008
(73) Patentinhaber: Airbus Deutschland GmbH, 21129 Hamburg (DE)
(72) Erfinder: JÖRN, Paul, 22763 Hamburg (DE); EBERTH, Ulrich, 86641 Rain (DE)
(74) Vertreter: Peckmann, Ralf
(86) Internationale Anmeldenummer: PCT/EP2006/064573
(87) Internationale Veröffentlichungsnummer: WO 2007/010052

(56) Entgegenhaltungen:
- EP-A- 0 284 497
- GB-A- 2 268 699
- ANONYMOUS: "Erläuterung zur TFP-Technologie" 7. März 2005 (2005-03-07), ANONYMOUS , XP002400709 Gefunden im Internet: URL:http://www.hightex-dresden.de/tfptech. pdf> [gefunden am 2006-09-27] Abbildung 3 Absatz [01.2] & 28. September 2006 (2006-09-28), Gefunden im Internet: URL:http://web.archive.org/web/*/http://ww w.hightex-dresden.de>

## Beschreibung

Die Erfindung betrifft ein Verfahren zur Herstellung von ein- oder mehrschichtigen Faservorformlingen im TFP-Verfahren ("Tailored Fiber Placement") mit insbesondere kraftflussorientiert ausgerichteten Fasersträngen, wobei die Faservorformlinge eine nahezu beliebige Materialstärke ohne störende Tragschichten und eine nahezu beliebige Oberflächengeometrie aufweisen.

Im Leichtbau, insbesondere im Flugzeugbau, finden zunehmend Verbundbauteile aus faserverstärkten Kunststoffen Verwendung, die mechanisch extrem belastbar sind und gleichzeitig ein hohes Gewichtseinsparungspotential bieten. Diese Bauteile werden mit Verstärkungsfasern gebildet, die anschließend zur Bildung des fertigen Bauteils mit einem aushärtbaren Kunststoffmaterial, beispielsweise einem Polyesterharz, einem Epoxydharz oder dergleichen, durchtränkt bzw. imprägniert werden.

Die Ausrichtung der Verstärkungsfasern in einem derartigen Bauteil hat maßgeblichen Einfluss auf dessen Steifigkeit und Festigkeit. Die Verstärkungsfasern sollten, um optimale mechanische Eigenschaften zu erreichen, wenn möglich der Belastungsrichtung folgen und keine Ondulationen aufweisen. Darüber hinaus ist eine gleichmäßige Beanspruchung jeder einzelnen Verstärkungsfaser anzustreben.

Mit konventionellen Halbzeugen, wie z. B. Geweben oder Gelegen zur Verstärkung des Kunststoffmaterials, sind nicht alle denkbaren Faserorientierungen realisierbar, da die Verstärkungsfasern dort immer mit einer bestimmten Orientierung verlaufen.

Eine Möglichkeit, der Forderung nach einer belastungsgerechten Faserausrichtung nachzukommen ist das TFP-Verfahren ("Tailored Fiber Placement") (siehe "Erläuterung zur TFP-Technologie", www.hightex-dresden.de). Hierbei werden Faserstränge zur mechanischen Verstärkung ("Rovings"), die wiederum mit einer Vielzahl von parallel zueinander verlaufenden diskreten Verstärkungsfasern gebildet sind, entlang einer beliebigen Bahnkurve abgelegt und mit Hilfe eines Fixierfadens auf einer Tragschicht angeheftet, wodurch die Ausrichtung der einzelnen Faserstränge nahezu optimal dem auf das fertige Verbundbauteil einwirkenden Kraftfluss anpassbar ist. Durch die so erreichte optimale Ausnutzung der mechanischen Belastbarkeit der Faserstränge kann deren Anzahl und somit auch das Gewicht minimiert werden. Zudem kann der Bauteilquerschnitt den jeweiligen lokalen Belastungen in idealer Weise angepasst werden. Weiterhin lassen sich gezielt Verstärkungen in besonders beanspruchten Zonen, wie zum Beispiel Krafteinleitungsbereichen oder dergleichen, durch die Ablage von zusätzlichen Fasersträngen bilden. Die diskreten Verstärkungsfasern sind beispielsweise Glasfasern, Kohlefasern, Aramidfasern oder dergleichen.

Die Fertigung von Faservorformlingen mittels des TFP- Verfahrens erfolgt auf üblichen CNC-gesteuerten Näh- bzw. Stickautomaten, die beispielsweise auch in der Textilindustrie Verwendung finden. Sind alle erforderlichen Lagen mit Fasersträngen abgelegt, wird der fertige Faservorformling, der im Allgemeinen .schon die gewünschte Endkontur aufweist, in eine verschließbare Form eingelegt, mit einem aushärtbaren Kunststoffmaterial imprägniert und abschließend zum fertigen Verbundbauteil ausgehärtet. Hierbei können mehrere TFP- Faservorformlinge und/oder Lagen aus Verstärkungsgeweben miteinander kombiniert werden. Die Imprägnierung der Faservorformlinge mit dem aushärtbaren Kunststoffmaterial kann beispielsweise mittels bekannter RTM-Verfahren ("Resin Transfer Moulding") in einer entsprechend gestalteten Form erfolgen. Gegebenenfalls wird vor der Durchführung des RTM-Verfahrens noch etwaiges, über eine vorgegebene Randkontur des Faservorformlings überstehendes Tragschichtmaterial abgetrennt.

Durch das TFP-Verfahren werden jedoch mit dem Fixierfaden sowie der Tragschicht zwei Komponenten in den Faservorformling eingebracht, die im späteren Verbundbauteil keine Funktion mehr erfüllen. Speziell die Tragschicht verursacht Schwierigkeiten bei der Realisierung einer idealen Lagenabfolge und stellt einen nicht zu vernachlässigenden Anteil am Gesamtgewicht dar, insbesondere wenn mehrere Faservorformlinge übereinander angeordnet werden. Zwar kann die Tragschicht auch mit einem Verstärkungsgewebe, zum Beispiel mit einem Glas- oder Kohlefasergewebe gebildet sein, doch auch in diesem Fall weist zumindest ein Teil der Verstärkungsfasern eine nicht belastungsgerechte Ausrichtung auf. Zudem wird auch das Verstärkungsgewebe durch die Penetrierung mit der Nähnadel während des TFP-Verfahrens beeinträchtigt, so dass die Werkstoffkennwerte beeinträchtigt werden können.

Weiterhin ist es bekannt, einen festen Schaumstoffkern als Unterstützungsstruktur für die Bildung von dreidimensionalen Faservorformlingen einzusetzen, wobei die Fixierfäden in der Oberseite des Schaumstoffkerns mittels eines Tuftingverfahrens festgeklemmt werden, so dass ein zusätzlicher Fixierunterfaden entbehrlich ist. Bei diesem Verfahren muss jedoch für jeden Faservorformling mit einer abweichenden Oberflächengeometrie ein spezieller Schaumstoffkern vorgehalten werden.

Aufgabe der Erfindung ist es daher, das bekannte TFP-Verfahren zur Herstellung von Faservorformlingen dahingehend zu verbessern, dass Faservorformlinge mit einer nahezu beliebigen Materialstärke und ohne den störenden Einfluss einer für das TFP-Verfahren ansonsten erforderlichen, am Faservorformling verbleibenden Tragschicht hergestellt werden, wobei für die Fertigung von Faservorformlingen mit unterschiedlichen Oberflächengeometrien nur eine universelle Unterlage vorgehalten werden muss. Darüber hinaus soll die Anheftung der Fixierfäden in dieser Unterlage verbessert werden.

Die erfindungsgemäße Aufgabe wird durch das Verfahren nach Maßgabe des Patentanspruchs 1 gelöst. Das Verfahren umfasst hierbei die Schritte:
- Ablegen und Anheften der Faserstränge auf einer flexiblen und elastischen Unterlage, insbesondere einer mit einem Elastomer gebildeten Unterlage, mit einem durch einen Nähkopf geführten Fixierfaden zur Bildung des Faservorformlings und
- Abheben des Faservorformlings von der Unterlage.

Infolge der elastisch und flexibel ausgebildeten Unterlage können Faservorformlinge mit unterschiedlichen dreidimensionalen Oberflächengeometrien auf ein und derselben universellen Unterlage gefertigt werden.

Nach Maßgabe einer vorteilhaften Ausgestaltung des erfindungsgemäßen Verfahrens wird eine Oberflächengeometrie der Unterlage zur Anpassung an eine für den Faservorformling vorgesehene Oberflächengeometrie vor dem Ablegen und Anheften der Faserstränge verändert.
Hierdurch ist es möglich, der Unterlage und damit auch dem darauf abzulegenden Faservorformling von Anfang an eine beliebige Oberflächengeometrie zu verleihen, so dass ein Faservorformling unmittelbar mit einer nahezu beliebigen dreidimensionalen Oberflächengeometrie unter Verwendung einer für die Durchführung des TFP-Verfahrens geeigneten, beispielsweise CNC-gesteuerten, Vorrichtung abgelegt und geheftet werden kann.
Weiterhin gestattet die Variabilität der Oberflächengeometrie der Unterlage die Herstellung einer Vielzahl von verschiedenen Faservorformlingen mit unterschiedlichen Oberflächengeometrien auf ein und derselben Unterlage.

In Gemäßheit einer weiteren vorteilhaften Ausgestaltung wird die Oberflächengeometrie der Unterlage zur Anpassung an eine für den Faservorformling vorgesehene Oberflächengeometrie vor dem Abheben des Faservorformlings verändert.
Hierdurch ist es beispielsweise möglich, die Unterlage zunächst in der Form einer Ebene auszubilden und die Faserstränge hierauf mittels des TFP-Verfahrens abzulegen und anzuheften. Anschließend kann der Unterlage eine von der ebenen Gestalt abweichende, nahezu beliebig dreidimensional gekrümmte Oberflächengeometrie gegeben werden. Somit können die Faserstränge zunächst in der xy-Ebene zur Bildung des Faservorformlings mit rechnergesteuerten Standard- Näh- bzw. Stickautomaten abgelegt und geheftet werden. Anschließend wird der Unterlage dann eine andere Oberflächengeometrie gegeben, die beispielsweise einer Oberflächengestalt eines Halbzylinders entspricht. Zur Bildung des Faservorformlings kann damit ein konstruktiv weniger aufwändiger Standard-Näh- bzw. Stickautomat eingesetzt werden, der lediglich eine Positionierung des Nähkopfes in der xy-Richtung des Raums erlaubt, wodurch sich ein beträchtliches Zeit- und Kosteneinsparungspotential ergibt.

Nach Maßgabe einer weiteren vorteilhaften Ausgestaltung wird die Oberflächengeometrie der Unterlage durch Unterstützungsorgane vorgegeben.
Diese Ausgestaltung ermöglicht, insbesondere in Kombination mit einem CNC- gesteuerten Näh- bzw. Stickautomaten oder dergleichen die Fertigung von Faservorformlingen mit unterschiedlichen Oberflächengeometrien auf ein und derselben, universellen Unterlage.

Nach Maßgabe einer weiteren vorteilhaften Ausgestaltung des erfindungsgemäßen Verfahrens werden die Unterstützungsorgane zur Anpassung an eine für den Faservorformling vorgesehene Oberflächengeometrie durch eine Steuer- und Regeleinrichtung verfahren.
Infolge der individuellen Ansteuerbarkeit der Unterstützungsorgane mittels der Steuer- und Regeleinrichtung kann der Unterlage eine nahezu beliebige Oberflächengeometrie gegeben werden. Die Unterstützungsorgane können hierbei beispielsweise als gleichmäßig zueinander beabstandet angeordnete verfahrbare Stempel bzw. Stützen ausgebildet sein, die unterhalb der Unterlage zu deren Abfangung angeordnet sind und deren Verfahrwege zum Beispiel von einer Steuer- und Regeleinrichtung oder von Hand in mindestens einer Dimension des Raums kontrolliert werden. Mittels der positionierbaren Stempel können bevorzugt sowohl Zug- als auch Druckkräfte auf die Unterlage aufgebracht werden, um eine variable Verformung der Unterlage zu erreichen. Die Steuer- und Regeleinrichtung zur Variation der Oberflächengeometrie der Unterlage ist hierbei vorzugsweise mit der CNC-Steuerung bzw. der Rechnersteuerung des zur Durchführung des TFP-Verfahrens benutzten Näh- bzw. Stickautomaten gekoppelt bzw. stellt einen Teil dieser Steuerung dar.

Eine weitere vorteilhafte Ausgestaltung sieht vor, dass der Faservorformling vor dem Abheben von der elastischen und flexiblen Unterlage fixiert wird.

Hierdurch werden etwaige, infolge des Abhebens von der Unterlage auftretende, unerwünschte Verschiebungen der Faserstränge innerhalb des Faservorformlings weitgehend vermieden. Zum Fixieren der Faserstränge im Faservorformling kann beispielsweise ein bei einer niedrigen Temperatur schmelzendes thermoplastisches Pulver, ein aushärtendes Klebemittel oder dergleichen verwendet werden.

Weitere vorteilhafte Ausgestaltungen des erfindungsgemäßen Verfahrens sind in den weiteren Patentansprüchen dargelegt.

In der Zeichnung zeigt:
- **Fig. 1**: eine Querschnittsdarstellung eines mit dem erfindungsgemäßen Verfahren gebildeten Faservorformlings auf einer elastischen und flexiblen Unterlage und
- **Fig. 2**: eine perspektivische Darstellung eines exemplarischen Umformprozesses der elastischen und flexiblen Unterlage mit aufliegenden Fasersträngen.

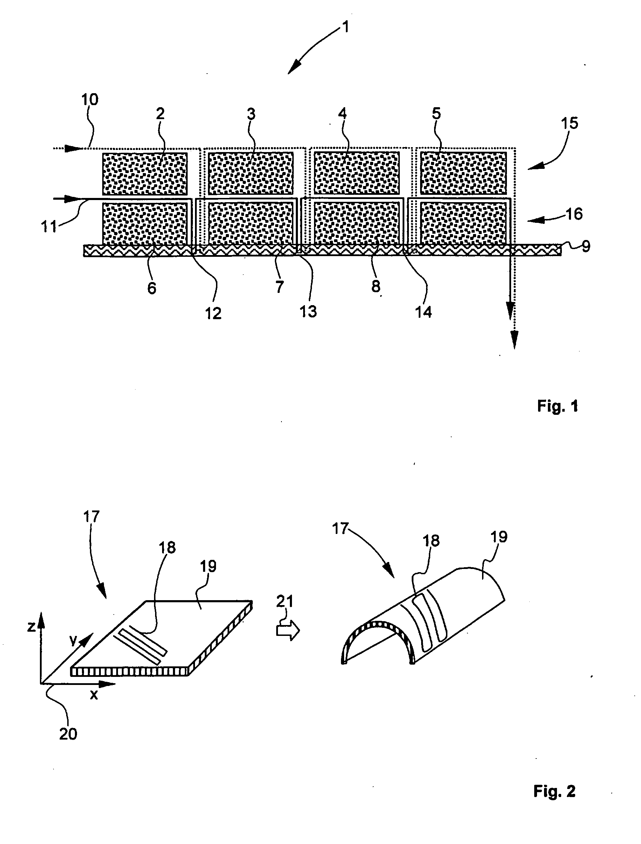

Anhand der Fig. 1 sowie der Fig. 2 soll der Ablauf des erfindungsgemäßen Verfahrens dargestellt werden.

Die Fig. 1 zeigt zunächst den Ablauf des erfindungsgemäßen Verfahrens anhand der Bildung eines ebenen Faservorformlings 1. Zur Bildung des Faservorformlings 1 werden nach Maßgabe des bekannten TFP-Verfahrens ("Tailored Fiber Placement") eine Vielzahl von Fasersträngen 2 bis 8 ("Rovings") auf der elastischen und flexiblen Unterlage 9 als Tragschicht insbesondere in kraftflussorientierter Richtung abgelegt und angeheftet. Die Unterlage 9 kann beispielsweise mit einer elastischen und flexiblen Platte aus einem Elastomer, insbesondere einer Gummiplatte bzw. einer Gummimatte oder dergleichen, gebildet sein. Die Faserstränge 2 bis 8 sind mit einer Vielzahl von diskreten Verstärkungsfasern ("Filamenten") aufgebaut, die in der Fig. 1 in etwa senkrecht zur Zeichnungsebene verlaufen. Als Verstärkungsfasern finden beispielsweise Glasfasern, Kohlefasern, Aramidfasern oder dergleichen Verwendung. Das Ablegen der Faserstränge 2 bis 8 auf der Unterlage 9 erfolgt mit einem nicht näher dargestellten Näh- bzw. Stickautomaten, der einen entsprechend ausgebildeten Nähkopf zur Führung der Faserstränge 2 bis 8 aufweist. Der Nähkopf kann gleichzeitig zur Anheftung der Faserstränge 2 bis 8 auf der elastischen Unterlage 9 dienen. Bevorzugt wird der Nähkopf mittels einer nicht dargestellten Steuer- und Regeleinrichtung, beispielsweise einer CNC-Steuerung oder dergleichen, zur Erzeugung von beliebigen und insbesondere kraftflussgerechten Ablagekurven der Faserstränge 2 bis 8 kontrolliert.

Das Anheften der Faserstränge 2 bis 8 auf der Unterlage 9 erfolgt durch die Fixierfäden 10,11, die mittels einer am Nähkopf angeordneten Nadel zumindest teilweise in die Unterlage 9 eingebracht werden. Hierbei bilden sich Fixierfadenschlaufen 12 bis 14, die eine sichere Befestigung der Fixierfäden 10,11 in der Unterlage 9 ohne das Erfordernis eines zusätzlichen Fixierunterfadens ermöglichen ("Tuftingverfahren"). Die Fixierfadenschlaufen 12 bis 14 werden hierbei durch geeignete Reibungsverhältnisse innerhalb der Unterlage 9 durch Einklemmen festgehalten. Hierdurch wird eine unkontrollierte Verschiebung der abgelegten Faserstränge 2 bis 8 auf der Unterlage 9 vermieden. Die Faserstränge 2 bis 8 werden bevorzugt durch ZickZack-Stiche auf der Unterlage 9 angeheftet.

Um einen sicheren Halt der Fixierfadenschlaufen 12 bis 14 innerhalb der elastischen und flexiblen Unterlage 9 zu gewährleisten und gleichzeitig deren Anpassbarkeit an unterschiedliche Oberflächengeometrien zu gewährleisten, wird diese mit einem Elastomer oder einem anderen, elastische und flexible Eigenschaften aufweisenden Material gebildet. Beispielsweise kann die elastische und flexible Unterlage 9 als Gummiplatte oder Silikonplatte ausgebildet werden. Die Unterlage 9 erfüllt dieselbe Funktion der bei konventionellen TFP-Verfahren notwendigen, im Allgemeinen gewebeartigen Tragschicht nebst Fixierunterfaden, ermöglicht aber darüber hinaus die Erstellung von Faservorformlingen mit einer komplexen Oberflächengeometrie ohne das Erfordernis der Vorhaltung von Stützkörpern in der Form von festen Schaumstoffkemen, die jeweils an die gewünschte Oberflächengeometrie des zu erstellenden Faservorformlings angepasst sind.

Der Faservorformling 1 weist im gezeigten Ausführungsbeispiel der Fig. 1 zwei Lagen 15,16 auf. Hierbei sind in der unteren Lage 16 die Faserstränge 6,7,8 abgelegt, während in der oberen Lage 15 die Faserstränge 2 bis 5 angeordnet sind. Mittels des erfindungsgemäßen Verfahrens können Faservorformlinge 1 mit einer nahezu beliebigen Anzahl von übereinander angeordneten Lagen gebildet werden. Die maximale Anzahl der im TFP-Verfahren übereinander abzulegenden Faserstränge 2 bis 8 wird im Wesentlichen durch die Länge der eingesetzten Nadel begrenzt, da die Nadel mit dem Fixierfaden sämtliche Lagen einschließlich eines Teils der Unterlage 9 durchstoßen muss.

Nach der Fertigstellung des Faservorformlings 1 kann dieser ohne eine Beschädigung der Integrität der Faserstränge 6,7,8 von der Unterlage 9 abgelöst werden, weil der Faservorformling 1 auf dieser nur durch die Fixierfadenschlaufen 12,13,14 locker gehalten wird bzw. "aufgetuftet" ist. Nach dem Ablösen des Faservorformlings 1 verbleiben nur die Fixierfäden 10,11 im Faservorformling 1, so dass hierdurch die mechanischen Eigenschaften des Faservorformlings 1 nicht nennenswert beeinträchtigt werden.

Da zunächst die Herstellung eines ebenen Faservorformlings 1 beschrieben werden sollte, weist die Unterlage 9 während des Verfahrensablaufs durchgängig eine ebene Oberflächengeometrie auf. Sollen jedoch Faservorformlinge mit gekrümmten Oberflächengeometrien hergestellt werden, so ist es erforderlich, der elastischen und flexiblen Unterlage 9 vor und/oder nach der Beendigung des Ablege- und Anheftprozesses mit Unterstützungsorganen die vorgesehene Oberflächengeometrie zu verleihen.

Die Fig. 2 illustriert exemplarisch die Umformung eines Faservorformlings 1 (vgl. Fig. 1) mit einer zunächst ebenen Oberflächengeometrie in den Faservorformling 17, der in etwa die Oberflächengeometrie eines Halbzylinders aufweist.

Zunächst wird ein Faserstrang 18 auf einer ebenen, elastischen und flexiblen Untertage 19 abgelegt und angeheftet. Der Faserstrang 18 ist hierbei repräsentativ für eine Vielzahl von weiteren Fasersträngen, die der besseren zeichnerischen Übersicht halber nicht dargestellt wurden. Die Vorgehensweise beim Ablegen und Anheften des Faserstrangs 18 auf der zunächst ebenen, elastischen und flexiblen Unterlage 19 entspricht hierbei den Ausführungen im Rahmen der Beschreibung der Fig. 1.

Aus der Umformung der zunächst ebenen Unterlage 19 ergibt sich insbesondere die vorteilhafte Wirkung, dass konstruktiv einfach aufgebaute Näh- bzw. Stickautomaten zum Ablegen und zum Anheften des Faserstrangs 18 eingesetzt werden können, da nur eine Bewegung des Nähkopfes in der xy-Richtung des Koordinatensystems 20, d.h. parallel zu der durch die Unterlage 19 aufgespannten Ebene nötig ist. Eine zusätzliche Bewegungsoption des Nähkopfes parallel zur z-Richtung des Koordinatensystems 20 ist nicht erforderlich.

Im Anschluss daran wird, wie durch den Pfeil 21 angedeutet, die Unterlage 19 derart umgeformt, dass diese beispielsweise die Oberflächengeometrie eines Halbzylinders erhält. Im Anschluss daran kann der Faservorformling 17 von der Unterlage 19 zur Weiterverarbeitung abgehoben werden. An Stelle der Oberflächengeometrie eines Halbzylinders kann der Unterlage 19 nahezu jede denkbare, zum Beispiel auch eine zumindest abschnittsweise sphärisch gekrümmte Oberflächengeometrie gegeben werden.

Die Verformung der elastischen und flexiblen Unterlage 19 kann zum Beispiel durch nicht dargestellte Unterstützungsorgane erfolgen. Diese Unterstützungsorgane sind gleichmäßig zueinander beabstandet, matrixartig unterhalb der elastischen und flexiblen Unterlage 19 angeordnet. Die Unterstützungsorgane können beispielsweise als vertikal verfahrbare Druckstempel oder dergleichen ausgebildet sein, deren Verfahrwege in z-Richtung des Koordinatensystems 20 mittels der Steuer- und Regeleinrichtung kontrollierbar sind, so dass mittels des erfindungsgemäßen Verfahrens Faservorformlinge 17 mit einer nahezu beliebigen Oberflächengeometrie ausgebildet werden können. Die Steuer- und Regeleinrichtung erlaubt hierbei einen nahezu vollautomatischen und hochpräzisen Ablauf des Verformungsprozesses der elastischen und flexiblen Unterlage 19 sowie des Ablage- und Heftprozesses der Faserstränge zur Bildung der Faservorformlinge 17. Somit lassen sich mittels des erfindungsgemäßen Verfahrens Faservorformlinge 17 mit einer nahezu beliebigen Oberflächengeometrie und hoher Maßhaltigkeit in großen Stückzahlen nahezu vollautomatisch fertigen. Weiterhin kann die Unterlage 19 in einem Spannrahmen aufgenommen sein, um, insbesondere bei einer geringen Materialstärke der verwendeten Unterlage, schon ohne Verstellung bzw. Abfangung durch die Unterstützungsorgane eine im Wesentlichen ebene Ausgangs-Oberflächengeometrie zu erreichen.

Nach dem Abschluss des Verformungsprozesses der Unterlage 19 kann der Faservorformling 17 von dieser leicht abgelöst und beispielsweise mittels des bekannten RTM-Verfahrens ("Resin Transfer Moulding") zu einem fertigen faserverstärkten Verbundbauteil ausgehärtet werden. Zu diesem Zweck wird der Faservorformling 17 mit einem aushärtbaren Kunststoffmaterial, beispielsweise einem Polyesterharz, einem Epoxydharz oder dergleichen durchtränkt bzw. imprägniert. Nach der Ablösung des Faservorformlings 17 von der Unterlage 19 kann es gegebenenfalls vorab erforderlich sein, die Randkonturen des Faservorformlings 17 durch Beschneidung auf ein vorgegebenes Sollmaß zu bringen.

Um eine ausreichend sichere Fixierung des Faserstrangs 18 zu gewährleisten, kann der Faservorformling 17 vor dem Abheben von der Unterlage 19 und/oder vor der Verformung der Unterlage 19 gegebenenfalls zusätzlich mit einem Bindemittel fixiert werden. Als Bindemittel kommen insbesondere in einem Temperaturbereich zwischen 50 °C und 150 °C schmelzende thermoplastische Kunststoffe und/oder geeignete Klebemittel, beispielsweise Schmelzkleber in Betracht. Diese Bindemittel können beispielsweise in Pulverform in und/oder auf den Faservorformling 17 aufgebracht werden.

Nach dem Ablösen des Faservorformlings 17 von der Unterlage 19 verbleiben, bis auf die Fixierfäden, keinerlei störende Elemente, insbesondere keine Tragschichten oder dergleichen, innerhalb des Faservorformlings 17, die zu einer Beeinträchtigung der mechanischen Eigenschaften des Faservorformlings 17 führen könnten. Dadurch können zur Herstellung von faserverstärkten Verbundbauteilen mit einer höheren Materialstärke mehrere, entsprechend ausgebildete Faservorformlinge zu mehrschichtigen Faservorformlingen übereinander angeordnet werden, bevor sie in eine Form für die Durchführung des RTM-Verfahrens eingelegt werden. Die mechanischen Eigenschaften der auf diese Weise gebildeten mehrschichtigen Faservorformlinge werden nicht durch Tragschichten oder andere im Rahmen des TFP-Verfahrens erforderliche Zwischenschichten oder dergleichen beeinträchtigt.

Für das Verfahren ist zu berücksichtigen, dass die dargestellte Reihenfolge der einzelnen Verfahrensschritte nur exemplarischen Charakter hat und im Bedarfsfall vom erläuterten Verfahrensablauf abgewichen werden kann.

Mittels des erfindungsgemäßen Verfahrens lassen sich Faservorformlinge mit einer im Wesentlichen kraftflussorientierten Faserausrichtung, die zudem eine von einer ebenen Gestalt abweichende Oberflächengeometrie aufweisen können, auf einfache Art und Weise herstellen. Die Faservorformlinge lassen sich zudem auf rechnergesteuerten Näh- bzw. Stickautomaten fertigen, deren Nähkopf lediglich in der xy-Ebene positionierbar ist, so dass sich eine erhebliche Zeit- und Kostenersparnis ergibt. Die nach Maßgabe des erfindungsgemäßen Verfahrens gebildeten Faservorformlinge können beispielsweise zur Herstellung von Verbundbauteilen im RTM-Verfahren eingesetzt werden.

Die auf diese Art und Weise hergestellten Verbundbauteile weisen eine nahezu optimale, das heißt im Wesentlichen kraftflussorientierte Faserausrichtung sowie keine nennenswerten Störstellen im Laminataufbau auf und ermöglichen somit die Schaf fung von mechanisch extrem beanspruchbaren Bauteilen, die zudem ein nur sehr geringes Gewicht aufweisen.

Die Erfindung betrifft demnach ein Verfahren zur Herstellung von ein- oder mehrschichtigen Faservorformlingen 1, 17 im TFP-Verfahren mit insbesondere kraftflussorientiert ausgerichteten Fasersträngen 2 bis 8, 18, wobei die Faservorformlinge 1, 17 eine nahezu beliebige Materialstärke ohne störende Tragschichten und eine nahezu beliebige Oberflächengeometrie aufweisen, welche die Schritte umfassen:
- Ablegen und Anheften der Faserstränge 2 bis 8, 18 auf einer flexiblen und elastischen Unterlage 9, 19, insbesondere einer mit einem Elastomer gebildeten Unterlage 9, 19, mit einem durch einen Nähkopf geführten Fixierfaden 10, 11 zur Bildung des Faservorformlings 1, 17 und
- Abheben des Faservorformlings 1, 17 von der Unterlage 9, 19.

Die Oberflächengeometrie der Unterlage 9, 19 wird zur Anpassung an eine für den Faservorformling 1, 17 vorgesehene Oberflächengeometrie vor dem Ablegen und Anheften der Faserstränge 2 bis 8, 18 vorzugsweise verändert.

Die Oberflächengeometrie der Unterlage 9, 19 wird beispielsweise zur Anpassung an eine für den Faservorformling 1, 17 vorgesehene Oberflächengeometrie vor dem Abheben des Faservorformlings 1, 17 verändert.

Die Oberflächengeometrie der Unterlage 9, 19 wird ferner vorteilhaft durch Unterstützungsorgane vorgegeben.

Die Unterstützungsorgane zur Anpassung an eine für den Faservorformling 1, 17 vorgesehene Oberflächengeometrie werden beispielsweise durch eine Steuer- und Regeleinrichtung verfahren.

Der Faservorformling 1, 17 wird vor dem Abheben von der Unterlage 9, 19 fixiert.

Das Fixieren des Faservorformlings 1, 17 erfolgt insbesondere mit einem Bindemittel, insbesondere mit einem thermoplastischen Kunststoffmaterial und/oder einem Klebemittel.

Der Fixierfaden 10, 11 wird beispielsweise mittels einer am Nähkopf angeordneten Nadel durch Einstechen in die Unterlage 9, 19 eingebracht und hierdurch werden gebildete Fixierfadenschlaufen 12 - 14 in der Unterlage 9, 19 festgehalten.

Die Position des Nähkopfes in Bezug auf die Unterlage 9, 19 wird vorteilhaft von der Steuer- und Regeleinrichtung in mindestens zwei Dimensionen des Raums kontrolliert, um nahezu beliebige und insbesondere kraftflussorientierte Ablagekurven der Faserstränge 2 - 8, 18 auf der Unterlage 9, 19 zu ermöglichen.

Zumindest bereichsweise werden beispielsweise mindestens zwei Faserstränge 2 - 8, 18 auf der Unterlage 9, 19 abgelegt und fixiert, um einen Faservorformling 1, 17 mit mindestens zwei Lagen 15, 16 zu bilden.

Mindestens zwei Faservorformlinge 1, 17 werden vorteilhaft nach dem Ablösen von der Unterlage 9, 19 zur Bildung eines mehrschichtigen Faservorformlings 1, 17 übereinander angeordnet.

### Bezugszeichenliste

- 1: Faservorformling
- 2: Faserstrang
- 3: Faserstrang
- 4: Faserstrang
- 5: Faserstrang
- 6: Faserstrang
- 7: Faserstrang
- 8: Faserstrang
- 9: Unterlage
- 10: Fixierfaden
- 11: Fixierfaden
- 12: Fixierfadenschlaufe
- 13: Fixierfadenschlaufe
- 14: Fixierfadenschlaufe
- 15: Lage
- 16: Lage
- 17: Faservorformling
- 18: Faserstrang
- 19: Unterlage
- 20: Koordinatensystem
- 21: Pfeil

## Patentansprüche

1. Verfahren zur Herstellung von ein- oder mehrschichtigen Faservorformlingen (1,17) im TFP-Verfahren mit kraftflussorientiert ausgerichteten Fasersträngen (2-8,18), wobei die Faservorformlinge (1,17) eine nahezu beliebige Materialstärke ohne störende Tragschichten und eine nahezu beliebige Oberflächengeometrie aufweisen, umfassend die Schritte:
a) Verändern der Oberflächengeometrie einer flexiblen und elastischen Unterlage (9,19) zur Anpassung an eine für den Faservorformling (1,17) vorgesehene Oberflächengeometrie vor dem Ablegen und Anheften der Faserstränge (2 bis 8,18) auf der Unterlage (9,19), wobei die Unterlage (9,19) mit einer Gummiplatte oder einer Silikonplatte gebildet ist
b) Ablegen und Anheften der Faserstränge (2 bis 8,18) auf der Unterlage (9,19) mit einem durch einen Nähkopf geführten Fixierfaden (10,11) zur Bildung des Faservorformlings (1,17),
c) Einstechen des Fixierfadens (10,11) mittels einer am Nähkopf angeordneten Nadel in die Unterlage (9,19), wodurch der Fixierfaden (10,11) in die Unterlage (9,19) eingebracht wird und hierdurch gebildete Fixierfadenschlaufen (12-14) in der Unterlage (9,19) festgehalten werden, und
d) Abheben des Faservorformlings (1,17) von der Unterlage (9,19).

2. Verfahren nach Anspruch 1, **dadurch gekennzeichnet, dass** die Oberflächengeometrie der Unterlage (9,19) zur Anpassung an eine für den Faservorformling (1,17) vorgesehene Oberflächengeometrie vor dem Abheben des Faservorformlings (1,17) verändert wird.

3. Verfahren nach Anspruch 1 oder 2, **dadurch gekennzeichnet, dass** die Oberflächengeometrie der Unterlage (9,19) durch Unterstützungsorgane vorgegeben wird.

4. Verfahren nach einem der Ansprüche 1 bis 3, **dadurch gekennzeichnet, dass** die Unterstützungsorgane zur Anpassung an eine für den Faservorformling (1,17) vorgesehene Oberflächengeometrie durch eine Steuer- und Regeleinrichtung verfahren werden.

5. Verfahren nach einem der Ansprüche 1 bis 4, **dadurch gekennzeichnet, dass** der Faservorformling (1,17) vor dem Abheben von der Unterlage (9,19) fixiert wird.

6. Verfahren nach einem der Ansprüche 1 bis 5, **dadurch gekennzeichnet, dass** das Fixieren des Faservorformlings (1,17) mit einem Bindemittel, insbesondere mit einem thermoplastischen Kunststoffmaterial und/oder einem Klebemittel, erfolgt.

7. Verfahren nach einem der Ansprüche 1 bis 6, **dadurch gekennzeichnet, dass** die Position des Nähkopfes in Bezug auf die Unterlage (9,19) von der Steuer- und Regeleinrichtung in mindestens zwei Dimensionen des Raums kontrolliert wird, um nahezu beliebige und insbesondere kraftflussorientierte Ablagekurven der Faserstränge (2-8,18) auf der Unterlage (9,19) zu ermöglichen.

8. Verfahren nach einem der Ansprüche 1 bis 7, **dadurch gekennzeichnet, dass** zumindest bereichsweise mindestens zwei Faserstränge (2-8,18) auf der Unterlage (9,19) abgelegt und fixiert werden, um einen Faservorformling (1,17) mit mindestens zwei Lagen (15,16) zu bilden.

9. Verfahren nach einem der Ansprüche 1 bis 8, **dadurch gekennzeichnet, dass** mindestens zwei Faservorformlinge (1,17) nach dem Ablösen von der Unterlage (9,19) zur Bildung eines mehrschichtigen Faservorformlings (1,17) übereinander angeordnet werden.

## Claims

1. Method for producing one- or multi-layer fibre preforms (1, 17) according to a TFP-method by means of fibre strands (2-8, 18) which are substantially force flux oriented, wherein said fibre preforms (1, 17) having an almost any material thickness devoid of unwanted support layers and an almost any surface geometry, comprising the following stages:
(a) Changing the surface geometry of a flexible and elastic substrate (9, 19) to adapt it to a surface geometry provided for the fibre preform (1, 17) previously to placing and fixing said fibre strands (2-8, 18) to said substrate (9, 19), said substrate (9, 19) being formed by a rubber plate or a silicone plate,
(b) Placing and fixing said fibre strands (2-8, 18) to the substrate (9, 19) by means of a fixing thread (10, 11) guided by a sewing head to form the fibre preform (1, 17),
(c) Piercing said fixing thread (10, 11) into said substrate (9, 19) by means of a needle attached to said sewing head, whereby said fixing thread (10, 11) being inserted into said substrate (9, 19) and fixing thread loops (12-14) formed in this manner being retained within said substrate (9, 19), and
(d) Removing said fibre preform (1, 17) from said substrate (9, 19) .

2. Method according to claim 1, **characterized in that** said surface geometry of said substrate (9, 19) is changed to be adapted to a surface geometry provided for the fibre preform (1, 17) previously to said removing of said fibre preform (1, 17) .

3. Method according to claim 1 or 2, **characterized in that** said surface geometry of said substrate (9, 19) is predetermined by means of support members.

4. Method according to at least one of the claims 1 to 3, **characterized in that** said support members are moved to be adapted to a surface geometry intended for said fibre preform (1, 17) by means of a control unit.

5. Method according to at least one of the claims 1 to 4, **characterized in that** said fibre preform (1, 17) is fixed previously to being removed from said substrate (9, 19).

6. Method according to at least one of the claims 1 to 5, **characterized in that** said fixing of said fibre preform (1, 17) is carried out using a binding agent, in particular a thermoplastic material and/or an adhesive.

7. Method according to at least one of the claims 1 to 6, **characterized in that** the position of said sewing head is controlled in relation to said substrate (9, 19) within at least two space dimensions by said control unit to allow for almost any and in particular force flux oriented placing paths of said fibre strands (2-8, 18) on said substrate (9, 19).

8. Method according to at least one of the claims 1 to 7, **characterized in that** at least two fibre strands (2-8, 18) are placed and fixed at least in sections to said substrate (9, 19) to form a fibre preform (1, 17) having at least two layers (15, 16).

9. Method according to at least one of the claims 1 to 8, **characterized in that** at least two fibre preforms (1, 17) are arranged one above the other to form a multi-layer fibre preform (1, 17) after the step of detaching said fibre preforms from the substrate (9, 19).

## Revendications

1. Procédé pour produire des ébauches fibreuses (1, 17) monocouches ou multicouches au cours d'un procédé TFP par écheveaux de fibre (2-8, 18) orientés par rapport au flux de force, lesdites ébauches fibreuses (1, 17) ayant une épaisseur quelconque de matière dépourvue de couches de support indésirables et une géométrie de surface quelconque, comprenant les étapes suivantes:
(a) Varier ladite géométrie de surface d'un support flexible et élastique (9, 19) pour l'adapter à une géométrie de surface prévue pour ladite ébauche fibreuse (1, 17) avant déposer et fixer lesdits écheveaux de fibre (2-8, 18) sur ledit support (9, 19), ledit support (9, 19) étant formé à partir d'une plaque en caoutchouc ou d'une plaque en silicone,
(b) Déposer et fixer lesdits écheveaux de fibre (2-8, 18) sur ledit support (9, 19) par l'intermédiaire d'un fil de fixation (10, 11) guidé par une tête à coudre pour former ladite ébauche fibreuse (1, 17),
(c) Piquer ledit fil de fixation (10, 11) dans ledit support (9, 19) par l'intermédiaire d'une aiguille à coudre appliquée à ladite tête à coudre, ledit fil de fixation (10, 11) étant mis dedans ledit support (9, 19), des boucles dudit fil de fixation (12-14) formées de cette façon étant retenues dans ledit support (9, 19), et
(d) Enlever ladite ébauche fibreuse (1, 17) dudit support (9, 19) .

2. Procédé selon la revendication 1, **caractérisé en ce que** ladite géométrie de surface dudit support (9, 19) est variée pour être adaptée à une géométrie de surface prévue pour ladite ébauche fibreuse (1, 17) avant l'étape d'enlever ladite ébauche fibreuse (1, 17).

3. Procédé selon la revendication 1 ou 2, **caractérisé en ce que** ladite géométrie de surface dudit support (9, 19) est prédéfinie par des organes de support.

4. Procédé selon l'une des revendications 1 à 3, **caractérisé en ce que** lesdits organes de support sont déplacés pour être adaptés à une géométrie de surface prévue pour ladite ébauche fibreuse (1, 17) par l'intermédiaire d'un équipement de commande et de réglage.

5. Procédé selon l'une des revendications 1 à 4, **caractérisé en ce que** ladite ébauche fibreuse (1, 17) est fixée avant être enlevée dudit support (9, 19).

6. Procédé selon l'une des revendications 1 à 5, **caractérisé en ce que** l'étape de fixer ladite ébauche fibreuse (1, 17) est effectuée avec un liant adhésif, notamment avec une matière thermoplastique et/ou avec un adhésif.

7. Procédé selon l'une des revendications 1 à 6, **caractérisé en ce que** la position de ladite tête à coudre est contrôlée par rapport audit support (9, 19) dans au moins deux dimensions spatiale par ledit équipement de commande et de réglage pour rendre possible des chemins incurvés quelconques et notamment orientés par rapport au flux de force desdits écheveaux de fibre (2-8, 18) déposés sur ledit support (9, 19).

8. Procédé selon l'une des revendications 1 à 7, **caractérisé en ce qu'**au moins deux écheveaux de fibre (2-8, 18) sont déposés et fixés au moins partiellement sur ledit support (9, 19) pour former une ébauche fibreuse (1, 17) ayant au moins deux couches (15, 16).

9. Procédé selon l'une des revendications 1 à 8, **caractérisé en ce qu'**au moins deux ébauches fibreuses (1, 17) sont arrangées l'une sur l'autre après l'étape de détacher les ébauches fibreuses dudit support (9, 19) pour former une ébauche fibreuse multicouche (1, 17).
